# EUROPEAN PATENT APPLICATION

(11) **EP 1 736 267 A1**
(43) Date of publication of application: **27.12.2006**
(21) Application number: 06253008.4
(22) Date of filing: 12.06.2006
(51) Int. Cl.: B23D 49/16

(54) **Reciprocating tool**

(30) Priority: 24.06.2005 GB 0512888; 14.07.2005 GB 0514446
(71) Applicant: GMCA PTY Ltd, Victoria 3045 (AU)
(72) Inventor: Roberts, Nigel, Pocklington York YO42 2QN (GB)
(74) Representative: Tomkinson, Alexandra

(57) **Abstract**

A reciprocating saw is provided which includes a drive shaft (4) having a saw blade clamping means (28) at an end thereof for securing a saw blade (5) thereto in use, and drive means for driving reciprocation of the drive shaft (4) and thus an attached saw blade (5) relative to a body portion (204) of the saw in use. The saw further includes saw blade support means (46) for engaging a surface of the saw blade (5) in use for supporting the same. The saw blade support means (46) is pivotally mounted to a part of the body portion (204) of the saw or to a substantially stationary bearing (6) associated with the drive shaft (4) to allow passive movement of the blade support means (46) with the drive shaft (4) and/or saw blade (5) in use.

## Description

This invention relates to a reciprocating tool, and particularly but not necessarily exclusively to a reciprocating tool in the form of a reciprocating saw.

Although the following description refers almost exclusively to a reciprocating saw in the form of a jigsaw which is capable of undergoing orbital, reciprocal and/or scrolling motion, it will be appreciated by persons skilled in the art that the present invention can be used on a jigsaw or other reciprocating tool which is capable of operating in only one or two of the above mentioned modes and/or further modes not mentioned herein.

It is known to provide a powered jigsaw tool with means for allowing the tool to be used in different cutting modes, including a reciprocating mode, wherein the blade of the tool is driven to reciprocate in a forwards/backwards or upwardly/downwardly manner for example; a scrolling mode, wherein the blade of the tool can be rotated about its longitudinal axis to a required angle by a user to allow cutting different shapes and intricate designs in a workpiece; and/or an orbital mode, wherein the blade of the tool can be driven in a pendulum like manner, such that the blade exhibits a forwards or lateral element of motion. During orbital cutting the otherwise vertically reciprocating saw blade typically undergoes a forwards motion as it ascends and a backwards motion as it descends. User selection means are typically provided on the body of the tool to allow the user to select the required cutting mode.

Conventional jigsaws are typically provided with a tool body, handle means for allowing a user to grip the tool body and drive means for driving motion of a shaft to which the blade is attached to in the selected cutting mode. Electrical powered means are also typically associated with the drive means for powering the driving of the drive means. Since the shaft to which the blade is attached to in use is typically elongate in form, it is important to ensure the shaft and blade are adequately controlled and supported in the selected cutting mode, thereby allowing a strong and efficient cutting stroke to be obtained and removing problems associated with flexing of the shaft or blade. This control and support is normally achieved by providing a support element in the form of a roller member which contacts the rear edge of the saw blade.

An example of a dual scrolling and orbital mode jigsaw having a supporting roller member is disclosed in US2004/0261274. The supporting roller member in this jigsaw is independently driven by the drive means of the tool to generate orbital motion in the saw blade against which it contacts. This is achieved by mounting the supporting roller member on a swivel bracket on the foot plate and the drive means in the tool causes the swivel bracket to cyclically pivot, thereby creating an orbital force on the blade. Since the supporting roller member will obstruct the saw blade when the tool is being used in a scrolling mode, the supporting roller member can be manually moved out of the way of the saw blade in the scrolling mode. This mechanism involves a relatively complex drive means to allow driving of motion of both the swivel bracket and of the shaft or plunger to which the saw blade is attached to in use. As such, the tool is expensive to produce.

A further example of a dual scrolling and orbital mode jigsaw which has a supporting roller member is disclosed in GB2394692. In this example, the roller is provided on a roller support frame which is mounted via a collar to the drive shaft of the jigsaw. As such, the roller rotates with the drive shaft in the scrolling mode and removes the requirement for the roller support member to be manually moved out of the way in the scrolling mode. The roller support frame also pivots relative to the jigsaw housing to enable the support roller to remain in contact with the jigsaw blade in the pendulum or orbital mode.

It is an aim of the present invention to provide a reciprocating tool or saw which provides alternative means for supporting a tool workpiece or saw blade in use.

It is a further aim of the present invention to provide a dual or multi mode jigsaw, such as for example capable of operating in scrolling, orbital and/or reciprocal modes which provides alternative means for supporting a saw blade in use.

According to a first aspect of the present invention there is provided a reciprocating tool, said tool including a drive shaft having a tool workpiece clamping means at an end thereof for securing a tool workpiece thereto in use and drive means for driving reciprocation of the drive shaft and thus an attached wool workpiece relative to a body portion of the tool in use, said tool further including tool workpiece support means for engaging a surface of the tool workpiece in use for supporting the same, and wherein the tool workpiece support means is pivotally mounted to a part of the body portion of the tool or to a substantially stationary bearing associated with the drive shaft.

The drive shaft is typically supported by at least an upper and lower bearing and the tool workpiece support means is pivotally mounted to said upper bearing or a frame associated with said upper bearing.

Thus, the tool workpiece support means are mounted to a part of the tool body or housing or upper bearing and can undergo pivotal motion with respect to the tool body or bearing. By pivotally mounting the tool workepice support means to nondriven and/or stationary/fixed parts of the tool, said support means passively follows the movement of an attached tool workpiece or drive shaft, thereby removing the requirement for separate driving means or complex mechanical linkages to the drive means.

The lower bearing is typically associated with the drive means for driving movement of the drive shaft in use.

Preferably the tool workpiece support means includes a support portion for engaging a part of the tool workpiece in use and a mounting for locating the support portion with respect to the tool workpiece, tool body or stationary bearing.

A first part of the mounting is typically pivotally attached to the tool body or housing or upper bearing and a second part of the mounting is attached to the support portion which engages with the tool workpiece in use.

Preferably the mounting is in the form of or includes at least one elongate arm member.

In addition to the pivotal mounting of the first part of the mounting, in one embodiment a further part of the mounting is attached to the drive shaft. In an alternative embodiment a further part of the mounting is attached to the tool workpiece clamping means.

An aperture or slot is provided on the further part of the mounting through which the drive shaft and/or tool workpiece clamping means can locate.

Preferably the drive shaft and/or tool workpiece clamping means is slidably located in said aperture or slot. One or more bearings and/or the like can be provided in association with the aperture or slot if required.

Preferably at least a first part or portion at a first end of the mounting is substantially parallel to the drive shaft. At least a second part or portion opposite to the first end or portion is typically substantially parallel to the drive shaft. At least one intermediate portion or further portion is provided between the first and second portions and said intermediate portion or further portion is typically provided substantially transverse or at an acute angle to the drive shaft.

The mounting is typically substantially rigid in form. In one embodiment the mounting is an integrally formed rigid arm member.

Preferably the tool is capable of operating in two or more different modes and selection means are provided on the tool to allow a user to move the tool between the different operational modes.

In one embodiment operation of the selection means is typically separate to and independent to operation of the tool workpiece support means.

In one embodiment at least the support portion of the tool workpiece support means is removed during one or more operational modes of the tool to an out of use position. For example, the support portion could block operation of the tool workpiece in one of the modes, such as a saw blade when operated in a scrolling mode. The support portion can be removed via an Allen Key and/or suitable tool.

In one embodiment at least the support portion is capable of being moved a spaced distance from the tool workpiece; such as for example during scrolling operations of the tool when in the form of a saw, to avoid of obstruction of the support portion with the saw blade.

Resilient biasing means can be associated with the mounting of the tool workpiece support means to allow the support means to be moved to an out of use position. The resilient biasing means typically biases the support means to an out-of-use position, wherein the support portion is a spaced distance apart from an attached tool workpiece. Locking means can be provided to allow the tool workpiece support means to be moved between the out of use position, to an in-use position, wherein the support portion is in contact with an attached tool workpiece. The locking means overcomes the biasing effect of the resilient biasing means and secures the support means in a required position relative to the tool workpiece. Release of the locking means allows the resilient biasing means to bias the support means to an out-of-use position.

Preferably the locking means includes a user actuation portion which allows a user to actuate the locking means from the exterior of the tool housing or body. For example, the user actuation portion can include a knob or lever which the user actuates to lock/unlock the locking means.

In one example the locking means is in the form of a rotatable member which, when rotated in an anti-clockwise or clockwise manner, moves the tool workpiece support means between in use and out of use positions. In both the in use and out of use positions, the tool workpiece support means can be freely pivotable if required via its mounting.

In one embodiment the tool workpiece support means is moved a spaced distance apart from an attached tool workpiece via actuation of the selection means for moving the tool workpiece between different operational modes, such as the scrolling and orbital modes in the case of a saw. In this embodiment linkage means are typically provided between or on the selection means or the tool workpiece support means. Actuation of the selection means causes the part of the upper bearing or tool workpiece support means to be moved between the in use and out of use positions. With the upper bearing or tool workpiece support means in the in use position, the support portion of the support means is moved into contact with an attached tool workpiece. With the upper bearing or tool workpiece support means in the out of use position, at least the support portion of the tool workpiece support means is moved out of contact with an attached tool workpiece.

The linkages can be provided on one of the tool workpiece support means of the selection means, and angled slot is provided in the linkage means and protruding means provided on the other of the tool workpiece support means or the selection means is slidable in the angled slot to move the tool workpiece between the in use and out of use positions.

The tool workpiece support means can include any means which allows a supporting force to be applied to a suitable surface of the tool workpiece in use. In one example, the tool workpiece support portion preferably includes one or more rollers and/or the like.

The tool workpiece can include any working part of the tool, such as a drill bit, saw blade and/or the like.

In one embodiment the tool is a saw and the tool workpiece is a saw blade,

A saw blade for use with the saw typically has a cutting edge provided longitudinally of the blade, a rear edge provided opposite to the cutting edge and two side surfaces. The tool workpiece or blade support means typically engages at least the rear edge of the saw blade but could also engage one or more of the sides of the saw if required.

Preferably the saw is capable of operating in a scrolling mode, wherein the drive shaft, and thus a blade attached to the drive shaft, can undergo rotational movement; a reciprocal mode, wherein the drive shaft, and thus a blade attached to the drive shaft, can undergo substantially linear motion; and/or an orbital or pendulum mode, wherein the drive shaft, and thus a blade attached to the drive shaft can undergo some element of lateral or forwards/rearwards motion. Selection between one or more of the operating modes can be made by selection means provided on the saw.

In a preferred embodiment the support portion of the blade support means engages with a surface of the saw blade in the pivotal or orbital mode of operation of the saw but not in a scrolling mode.

Linkage associated with the lower bearing of the drive shaft typically generates the pendulum or orbital type motion of the drive shaft.

Preferably the saw is in the form of a jigsaw and further preferably the jigsaw is in the form of a scroller/orbital jigsaw.

Power means are typically provided in or associated with the saw or tool to provide electrical power to the drive means to drive movement of the saw blade, tool workpiece and/or drive shaft in the different operational modes, such as for example in reciprocation, orbital and/or scrolling modes.

The drive means typically includes a motor and suitable linkage is provided between the motor and the drive shaft to provide motion suitable for the selected operating mode of the tool.

According to separate independent aspects of the present invention there is provided a powered jigsaw; a powered scroller and orbital mode jigsaw; and blade support means.

According to a further aspect of the present invention there is provided a reciprocating saw, said saw including a drive shaft having a saw blade clamping means at an end thereof for securing a saw blade thereto in use and drive means for driving reciprocation of the drive shaft and thus an attached saw blade relative to a body portion of the saw in use, said saw further including saw blade support means for engaging a surface of the saw blade in use for supporting the same, and wherein the saw blade support means is pivotally mounted to a part of the body portion of the saw or to a substantially stationary bearing associated with the drive shaft.

According to a yet further aspect of the present invention there is provided a power tool, said tool including a drive shaft having a tool workpiece clamping means at an end thereof for securing a tool workpiece thereto in use and drive means for driving movement of the drive shaft and thus an attached tool workpiece relative to a body portion of the tool in use, said tool further including tool workpiece support means for engaging a surface of the tool workpiece in use for supporting the same, and wherein the tool workpiece support means is pivotally mounted to a part of the body portion of the tool or to a substantially stationary bearing associated with the drive shaft,

According to a further aspect of the present invention there is provided a method of supporting a tool workpiece of a power tool in use, said method including the steps of clamping a tool workpiece to a drive shaft using tool workpiece clamping means, engaging tool workpiece support means with a surface of the tool workpiece for supporting the workpiece and wherein the tool workpiece support means is pivotally mounted to a part of the body portion of the tool or to a substantially stationary bearing associated with the drive shaft.

Thus, the tool workpiece or blade support means of the present invention has the advantage that it passively follows the movement of the drive shaft in use. As such, separate drive means or complicated mechanisms do not need to be provided in the tool of the present invention.

Embodiments of the present invention will now be described with reference to the accompanying figures, wherein:
Figure 1 is a perspective view of a jigsaw according to an embodiment of the present invention;
Figure 2 is a perspective view of part of the internal mechanism of a jigsaw tool according to an embodiment of the present invention;
Figure 3 is a perspective view of a locking mechanism for blade support means in one embodiment; and
Figures 4a and 4b illustrate a locked and unlocked position respectively of blade support means according to a further embodiment of the present invention.

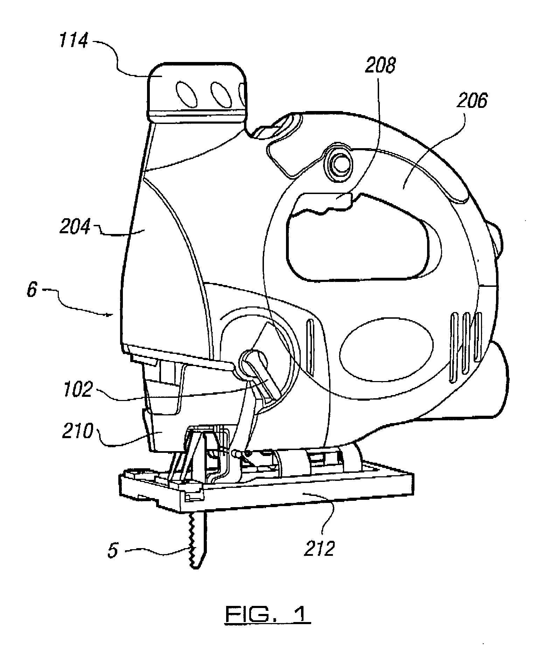

Referring firstly to figure 1, there is illustrated a reciprocating saw in the form of a jigsaw 6. The jigsaw 6 is capable of operating in a reciprocal mode, wherein the blade is capable of undergoing substantially vertical upwardly and downwardly movement; an orbital mode, wherein the blade is capable of undergoing a pendulum like motion or side to side motion; and a scrolling mode, wherein the blade can be rotated to a required position by a user in use.

User selection means in the form of a rotatable lever arm 102 is provided on the body 204 of jigsaw 6 to allow the jigsaw to be moved between the different operational modes by a user in use. The body of the tool typically comprises two shell like elements which are joined together in use but any other arrangement can be used for the tool housing or body as required.

A rotatable scrolling knob 114 is provided on a top edge of jigsaw 6 to allow rotation of the saw blade 5 in use for scrolling cutting operations. The scrolling knob 114 is typically in communication with a drive shaft of the tool described in more detail below. Rotation of the scrolling knob allows rotation of the drive shaft, and thus a saw blade attached to the drive shaft, when the appropriate tool operating mode is selected. The jigsaw further includes a handle portion 206 for allowing a user to grip the tool in use, an operational switch 208 to allow the tool to be moved between a powered "on" condition and an unpowered "off" condition. A guard 210 is provided on the front of the tool adjacent the saw blade to prevent accidental user access to the blade during use of the tool, thereby preventing the user from accidentally cutting their hand or getting clothing and/or the like caught in the blade. A support plate or foot plate 212 is attached to the base of the jigsaw to allow the jigsaw to be supported on a workpiece in use. The support plate can typically be movably or detachably mounted with respect to the tool body.

The body of the jigsaw typically includes power means in the form of a connection to an electrical power supply, such as a mains electrical supply or rechargeable battery (not shown). Drive means are provided in the jigsaw and typically includes a motor and gear mechanism, which drives movement of a drive shaft 4 in the required manner depending on the operational mode selected by the user. Thus, the motor and gear mechanism drive the movement of the drive shaft 4 in a reciprocating manner and can also drive the movement of drive shaft in a pendulum like manner during orbital cutting.

It will be appreciated by persons skilled in the art that any suitable gear and drive mechanism can be used with the tool of the present invention to provide the different operational cutting modes.

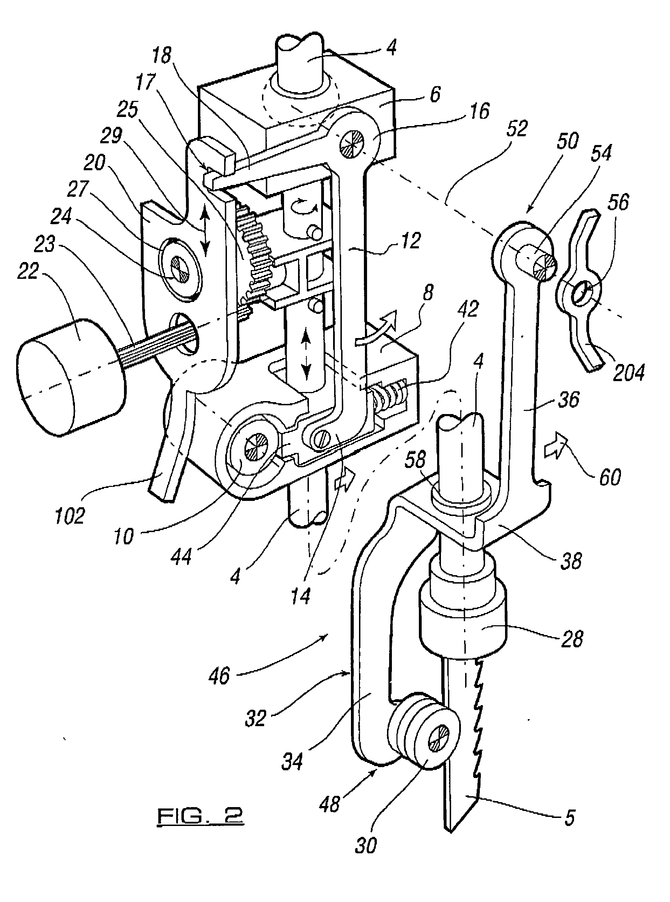

Referring to figure 2, there is illustrated a partially exploded view of part of the internal mechanism of the jigsaw shown in figure 1.

The drive shaft is supported in the tool body by an upper bearing 6 and a lower bearing 8. A pivot arm 12 is provided between the upper and lower bearings 6, 8. End 14 of pivot arm 12 is connection to lower bearing 8 for driving orbital motion of drive shaft 4 when the appropriate mode is selected by a user using selector knob 102. An end 16 of pivot arm 12 is pivotally mounted to upper bearing 6. A protruding portion 18 of end 16, which typically protrudes substantially perpendicularly to pivot arm 12, connects to a drive plate 20 via location in slot 17. Drive plate 20 in turn is connected to a motor 22 and a cam mechanism 24.

A motor shaft 23 connects motor 22 to a gear mechanism 25 and drives rotary motion of said gear mechanism. Movement of the gear mechanism causes motion of cam 24. Since cam 24 sits in a slot 27 in drive plate 20, movement of cam 24 causes drive plate to undergo reciprocal motion in a substantially vertical direction, as shown by arrow 29. This in turn causes protruding portion 18 to move in a reciprocal manner which pivots arm 12 about end 16.

A cam 10 is located in lower bearing 8 and communicates with selector knob 102. This lower bearing cam mechanism allows the degree of orbital motion of drive shaft 4 to be adjusted by a user as required. End 14 of pivotal arm 12 drives pivotal motion of drive shaft 4 on pivoting of arm 12. Resilient biasing means in the form of a spring 42 is provided to help return end 14 or connection member 44 to which end 14 is attached to a return position.

In accordance with the present invention, blade support means 46 are provided for engaging a rear surface of blade 5 for supporting the same during orbital operations of the jigsaw 6. Blade support means includes a mounting in the form of an elongate arm member 32 and a support portion in the form of a roller 30 attached at a free end 48 of arm member 32. A further end 50 of arm member 32 is pivotally mounted to housing 204 of the tool.

In the illustrated example, arm member 32 typically pivots about an axis which is typically coaxial with end 16 of pivot arm 12, as shown by line 52. More particularly, tab 54 provided at end 50 of arm member 32 is rotatably mounted in an aperture 56 provided on or associated either directly or indirectly with tool body 204.

Arm member 32 includes a first upper arm portion 36, a second lower arm portion 34 and an intermediate portion 38 provided between said upper and lower arm portions. Each arm portion is typically substantially rigid in form. The arm portions can be integrally formed or attached to each other. Upper arm portion 36 and lower arm portion 34 are each substantially parallel with drive shaft 4. Intermediate portion 38 is typically substantially transverse to drive shaft 4.

An aperture 58 is defined in intermediate portion 38 and a bearing is associated with the same. Drive shaft 4 is slidably located in said aperture 58 and engages with said bearing.

The blade support means passively follows the pivotal movement of drive shaft 4, as shown by arrow 60. As such, no separate drive means are required to drive the blade support means as is the case with prior art devices.

It will be appreciated that the roller could engage the rear and/or lateral surfaces of blade 5. Furthermore, the blade support mounting arm 46 could include any number of members. For example, two substantially parallel lower arm portions may be provided to engage either side of roller 30.

Roller 30 is typically removed from end 48 during scrolling operations of the tool so as to remove any restrictions. In the embodiment illustrated, the roller is typically removed by a user using an Allen Key or actuating some other release actuation mechanism.

The blade 5 is typically attached to drive shaft 4 via blade clamping means 28 and any suitable blade clamping means can be provided.

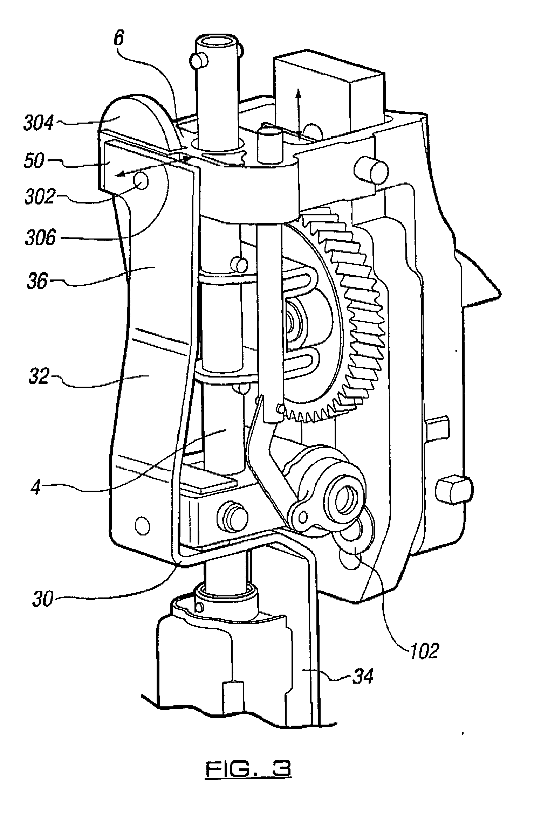

Referring to figure 3, there is illustrated a further embodiment of the present invention in which the roller can be moved out of engagement with saw blade 5 so that it is separated a spaced distance apart therefrom. With the roller 30 a spaced distance apart from blade 5, this prevents obstruction of roller.30 when the tool is being used in a scrolling operation or non-orbital mode.

In figure 3, the upper arm portion 36 is pivotally mounted to upper bearing 6, rather than to the tool housing as in the above described embodiment, via pivot point 302. A rotatable member in the form of dial 304 is associated with the pivotal mounting. With the tool housing located around the illustrated mechanism in use, at least a portion of dial 304 protrudes from the exterior of the tool housing, thereby allowing a user to rotate the dial as required. Rotation of dial 304 between anti-clockwise and clockwise directions typically moves upper arm portion 36 between an in-use position, wherein end 50 of arm 32 is adjacent upper bearing 6, and an out-of-use position, wherein end 50 is a spaced distance apart from upper bearing 6, as shown by arrow 306. Due to the angle on which intermediate portion 38 is mounted relative to drive shaft 4, movement of arm portion 36 to the in-use position, moves roller provided at the free end of lower arm portion 34 into an engaged position with an attached saw blade. Movement of arm portion 36 to an out of use position moves the roller to a disengaged position, wherein the roller is a spaced distance apart from the blade. Resilient biasing means can be associated with dial 304 if required.

In an alternative embodiment a push button or rotatable screw can be provided to move arm member 32 between the in-use and out of use positions.

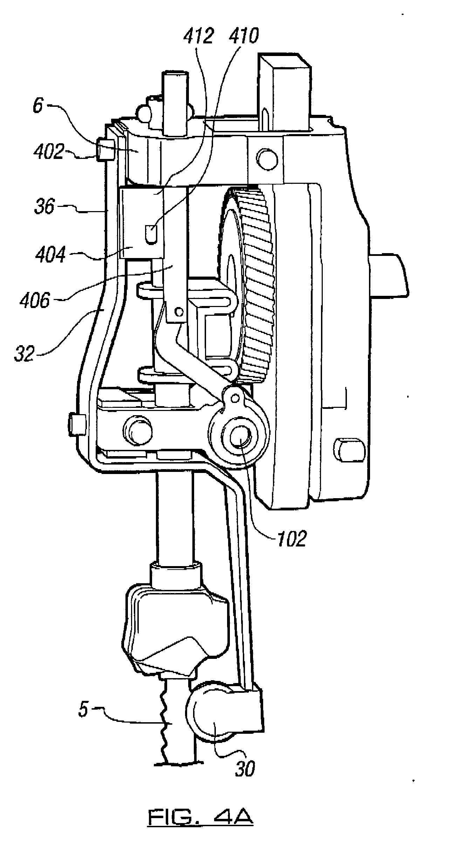

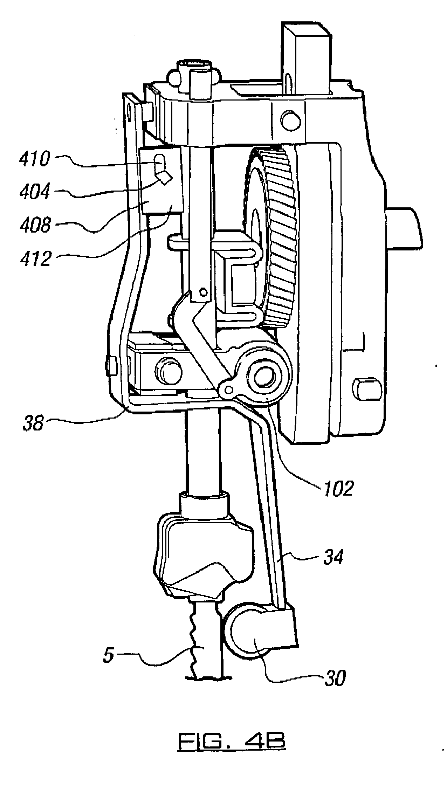

Referring to figures 4a-4b, a further embodiment of a blade support means release or locking mechanism is illustrated. In this embodiment, arm member 32 is again pivotally mounted to upper bearing 6 via pivotal mounting 402. However, a further linkage 404 is provided between upper arm portion 36 and linkage arm 406 associated with selector lever arm 102. This further linkage allows arm member 32 to be moved between in-use and out of use positions via lever arm 102. This is particularly advantageous since it allows a user to move the tool and the roller between scrolling and orbital conditions via actuation of a single lever. The other described embodiments typically require the user to undertake a two step process; a first step to move lever 102 between the required operational mode, and a second step to remove roller 30 from the tool or move the roller to an out of use position via dial 304.

Further linkage 404 is in the form of a plate 408 with an angled slot 410 defined therein. In the illustrated example, slot 410 includes a first upper substantially vertical portion located nearest to arm 32, a second lower substantially vertical portion located nearest to linkage arm 406 and an intermediate angled portion therebetween. Head 412 is attached to the linkage arm 406 and is slidably located in slot 410. With head 412 located in the first upper portion of slot 410 closest to arm 32, arm 32 is moved towards upper bearing 6, as shown in figure 4a, thereby bringing roller 30 into engagement with blade 5. With head 412 located in second lower portion of slot 410, as shown in figure 4b, arm 32 is moved away from upper bearing 6, thereby moving roller a spaced distance apart from blade 5 to an out of use position.

The top of linkage arm 406 is typically associated with scrolling knob 114.

Any or any combination of the above described features can be used in accordance with a reciprocating saw or tool of the present invention.

## Claims

1. A reciprocating tool, said tool including a drive shaft having a tool workpiece clamping means at an end thereof for securing a tool workpiece thereto in use and drive means for driving reciprocation of the drive shaft and thus an attached wool workpiece relative to a body portion of the tool in use, said tool further including tool workpiece support means for engaging a surface of the tool workpiece in use for supporting the same, and wherein the tool workpiece support means is pivotally mounted to a part of the body portion of the tool or to a substantially stationary bearing associated with the drive shaft.

2. A tool according to claim 1 wherein the drive shaft is supported by an upper and lower bearing and the tool workpiece support means is pivotally mounted to said upper bearing or a frame associated with said upper bearing.

3. A tool according to claim 2 wherein the lower bearing is associated with drive means for driving movement of the drive shaft in use.

4. A tool according to claim 1 wherein the tool workpiece support means includes a support portion for engaging a part of the tool workpiece in use and a mounting for engaging the support portion to the tool body or stationary bearing.

5. A tool according to claim 4 wherein the mounting includes at least one elongate arm member.

6. A tool according to claim 4 wherein a first part of the mounting is pivotally attached to the tool body or stationary bearing and a further part of the mounting is attached to the drive shaft and/or tool workpiece clamping means.

7. A tool according to claim 6 wherein the further part of the mounting is provided with an aperture through which the drive shaft and/or tool workpiece clamping means is located.

8. A tool according to claim 7 wherein the drive shift and/or workpiece clamping means is slidably located in said aperture.

9. A tool according to claim 7 wherein one or more bearings are associated with said aperture.

10. A tool according to claim 6 wherein the first part of the mounting is adjacent a first end thereof and is substantially parallel to the drive shaft.

11. A tool according to claim 10 wherein an end of the mounting opposite to the first end is also substantially parallel to the drive shaft.

12. A tool according to claim 11 wherein an intermediate portion provided between the first and opposite ends and said intermediate portion is substantially transverse or at an acute angle to the drive shaft.

13. A tool according to claim 4 wherein the mounting is substantially rigid in form.

14. A tool according to claim 1 wherein the tool is capable of operating in a number of different modes and selection means are provided on the tool to allow a user to move the tool between the different operational modes.

15. A tool according to claim 14 wherein operation of the selection means is separate to and independent to operation of the tool workpiece support means.

16. A tool according to claim 14 wherein at least the support portion of the tool workpiece support means is removed or moved a spaced distance apart from said tool workpiece in one or more of said operational modes to an out of use position.

17. A tool according to claim 16 wherein the support portion is removed using an Allen Key.

18. A tool according to claim 16 wherein the support portion is moved a spaced distance apart from said tool workpiece to the out of use position using resilient biasing means associated with the mounting of said tool workpiece support means.

19. A tool according to claim 18 wherein locking means are provided to allow the tool workpiece support means to be moved between the out of use position, to an in use position wherein the support portion of the tool workpiece support means is moved into engagement with the tool workpiece.

20. A tool according to claim 19 wherein the locking means includes a user actuation portion located externally of the tool body or housing.

21. A tool according to claim 20 wherein the locking means includes a rotatable member which, when rotated, moves the tool workpiece support means between the out of use position and the in use position.

22. A tool according to claims 14 and 16 wherein movement of the tool workpiece support means between an in use position and the out of use position is undertaken by actuation of the selection means for moving the tool between different operational modes.

23. A tool according to claim 22 wherein linkage means are provided on the tool workpiece support means or the selection means, an angled slot being provided in the linkage means and protruding means being provided on the other of the tool workpiece support means or the selection means slidable in the angled slot to move the tool workpiece between the in use and out of use positions.

24. A tool according to claim 4 wherein the tool workpiece support portion is in the form of a roller.

25. A tool according to claim 1 wherein electrical power means are provided or associated with the tool to allow the drive means to drive movement of the drive shaft in use.

26. A tool according to claim 1 wherein the tool is a saw and the tool workpiece is a saw blade.

27. A tool according to claim 26 wherein the saw blade has a cutting edge provided longitudinally thereof, a rear edge provided opposite to the cutting edge and two side surfaces, the tool workpiece support means is in the form of a blade support means and engages at least the rear edge of said saw blade.

28. A tool according to claim 26 wherein the saw is capable of operating in a scrolling mode, a reciprocal mode and/or an orbital mode.

29. A tool according to claims 27 and 28 wherein the blade support means engages with the saw blade in the reciprocal and/or orbital modes.

30. A tool according to claim 1 wherein the tool is a jigsaw.

31. A reciprocating saw, said saw including a drive shaft having a saw blade clamping means at an end thereof for securing a saw blade thereto in use and drive means for driving reciprocation of the drive shaft and thus an attached saw blade relative to a body portion of the saw in use, said saw further including saw blade support means for engaging a surface of the saw blade in use for supporting the same, and wherein the saw blade support means is pivotally mounted to a part of the body portion of the saw or to a substantially stationary bearing associated with the drive shaft.

32. A power tool, said tool including a drive shaft having a tool workpiece clamping means at an end thereof for securing a tool workpiece thereto in use and drive means for driving movement of the drive shaft and thus an attached tool workpiece relative to a body portion of the tool in use, said tool further including tool workpiece support means for engaging a surface of the tool workpiece in use for supporting the same, and wherein the tool workpiece support means is pivotally mounted to a part of the body portion of the tool or to a substantially stationary bearing associated with the drive shaft.
